(19) **Europäisches Patentamt / European Patent Office / Office européen des brevets**

(11) **EP 2 297 476 B1**

(12) **FASCICULE DE BREVET EUROPEEN**

(45) Date de publication et mention
de la délivrance du brevet:
**04.01.2012 Bulletin 2012/01**

(21) Numéro de dépôt: **09737068.8**

(22) Date de dépôt: **16.07.2009**

(51) Int Cl.:
*F16D 48/06* (2006.01)

(86) Numéro de dépôt international:
**PCT/FR2009/051414**

(87) Numéro de publication internationale:
**WO 2010/007321 (21.01.2010 Gazette 2010/03)**

(54) **MODULE DE PILOTAGE EN COUPLE DE MOYENS D'ACCOUPLEMENT A FRICTION D'UNE CHAINE DE TRANSMISSION DE VEHICULE AUTOMOBILE COMPORTANT UN OBSERVATEUR D'ETATS**

MODUL ZUR DREHMOMENTSTEUERUNG EINER REIBKUPPLUNGSVORRICHTUNG EINES KRAFTFAHRZEUGANTRIEBSSTRANGS MIT ZUSTANDSBEOBACHTER

MODULE FOR THE TORQUE CONTROL OF FRICTION COUPLING MEANS OF A MOTOR VEHICLE DRIVE TRAIN COMPRISING A STATE OBSERVER

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **16.07.2008 FR 0854822**

(43) Date de publication de la demande:
**23.03.2011 Bulletin 2011/12**

(73) Titulaire: **Valeo Embrayages**
**80009 Amiens Cedex 2 (FR)**

(72) Inventeur: **MAUREL, Pascal**
**F-75009 Paris (FR)**

(56) Documents cités:
WO-A-2007/148203      DE-A1-102006 014 072
DE-A1-102006 045 858      DE-A1-102007 006 799
FR-A- 2 862 732      US-A1- 2005 130 800

**Description**

L'invention se rapporte à un module de commande en couple d'au moins un moyen d'accouplement à friction d'une chaîne de transmission de véhicule automobile.

L'invention se rapporte plus particulièrement à un module de pilotage en couple d'au moins deux moyens d'accouplement à friction entre un arbre moteur commun et un arbre associé d'entrée de boîte de vitesses appartenant à une chaîne de transmission d'un véhicule automobile, la chaîne de transmission comportant au moins les organes suivants :

-   l'arbre moteur qui fournit un couple moteur ;
-   chaque moyen d'accouplement qui est actionné par un actionneur ;
-   chaque arbre associé d'entrée de boîte de vitesses qui est susceptible d'être accouplé à l'arbre moteur par le moyen d'accouplement associé ;
-   un arbre de sortie de boîte de vitesses qui est entraîné en rotation par chaque arbre d'entrée ;
-   une boîte de vitesses qui est susceptible d'être pilotée de manière à changer le rapport de transmission entre chaque arbre d'entrée et l'arbre de sortie ;

le module de pilotage du moyen d'accouplement en couple déterminant une valeur de consigne d'une grandeur physique de commande de l'actionneur de chaque moyen d'accouplement à partir d'une consigne de couple et de grandeurs physiques mesurées sur la chaîne de transmission ;
le module de pilotage comportant :

-   des moyens de mesure de variables d'état mesurées de la chaîne de transmission, les variables d'état mesurées étant représentative de l'état dynamique actuel partiel de la chaîne de transmission ;
-   des moyens de mesure de variables de commande de la chaîne de transmission ;
-   un observateur, notamment du type observateur de Luenberger, mettant en oeuvre un modèle mathématique dynamique simulant le comportement dynamique desdits organes de la chaîne de transmission du véhicule automobile, et qui est susceptible de calculer une estimation de variables d'état représentatives de l'état dynamique actuel complet de la chaîne de transmission à partir des variables d'état mesurées, des variables de commande mesurées et de l'estimation précédente des variables d'état, en correspondance avec une matrice d'évolution ;
-   des moyens de correction appartenant à l'observateur qui corrigent l'estimation précédente des variables d'état en soustrayant le produit d'une matrice de correction par la différence entre les variables d'état mesurées et les variables d'état estimées correspondantes ;
-   des moyens de régulation de la consigne de couple par comparaison avec un couple estimé calculé à partir des variables d'état estimées par l'observateur.

Un véhicule automobile comprend généralement un moyen d'accouplement entre un arbre moteur du véhicule automobile, qui est entraîné en rotation par un moteur à combustion interne et/ou un moteur électrique, et un arbre d'entrée de la boîte de vitesses. La boîte de vitesses peut être du type mécanique à plusieurs rapports de transmission avec ou sans robotisation des changements de rapports.

Le moyen d'accouplement est en général un embrayage à friction, commandé par un actionneur piloté par un système de traitement de l'information en fonction d'un certain nombre de paramètres mesurés ou estimés tels que des positions, des vitesses, des accélérations, des efforts, des couples, des pressions et des tensions électriques.

L'actionneur de commande de l'embrayage agit sur la position d'un organe mobile de cet embrayage, tel par exemple que la butée d'embrayage, qui détermine la position d'un plateau de pression et la charge appliquée à ce plateau par un diaphragme annulaire pour le serrage des garnitures de friction d'un disque relié à un arbre d'entrée de la boîte de vitesses, ce serrage déterminant le couple transmis par l'embrayage.

L'actionneur peut aussi agir directement sur la charge appliquée sur le plateau de pression par une liaison mécanique ou hydraulique par exemple. La commande automatisée de l'embrayage doit prendre en compte un grand nombre de grandeurs physiques, de grandeurs d'état et de grandeurs de commande qui sont mesurées ou estimées sur le moteur, sur la boîte de vitesses et sur le reste du véhicule, et de signaux représentant la volonté du conducteur, l'adaptation du comportement de la transmission au style de conduite du conducteur, l'état dynamique du véhicule et l'état du module de commande (initialisation, mode normal, mode dégradé, apprentissage, arrêt, ....) etc.

On a déjà proposé de commander l'embrayage pour lui faire transmettre un couple désiré, mais le couple transmis par l'embrayage varie de façon non linéaire en fonction de la pression ou de la position d'un organe de commande de l'embrayage, tel que la butée d'embrayage par exemple, il varie d'un embrayage à l'autre en raison des dispersions de fabrication, et il varie aussi en fonction d'un certain nombre de paramètres tels que la température, l'état des garnitures et des surfaces de friction du mécanisme d'embrayage, etc.

Il est donc extrêmement difficile de commander l'embrayage de façon correcte pour lui faire transmettre un couple désiré qui a été déterminé par des moyens de calcul et de traitement de l'information.

Le document DE10 2006 045 858 montre un module de pilotage en couple d'au moins deux moyens d'accouplement à friction selon le préambule de la revendication 1.

Le document US2005/0130800 montre un module de pilotage d'un seul embrayage à friction comprenant des moyens de mesure de variables d'état de la chaîne de tranmission, des moyens de mesure de variables de commande de la chaîne de transmission, un observateur susceptible de calculer une estimation de variables d'état et des moyens de correction appartenant à l'observateur qui corrigent l'estimation des variables d'états.

Le document FR 2862732 montre un module de pilotage d'un embrayage double comprenant des moyens de mesure de variables d'état de la chaîne de tranmission, des moyens de mesure de variables de commande de la chaîne de transmission et un observateur susceptible de calculer une estimation de variables d'état.

Le document FR-A-2.863.327 est basé sur l'utilisation de la mesure du couple moteur pour la reconstruction de l'information du couple d'embrayage et sur une caractéristique apprise du couple d'embrayage en fonction de la position de la butée d'embrayage. Cela apporte une amélioration au point de vue de la dynamique de régulation du couple d'embrayage en conservant la reproductibilité. La consigne de comportement est alors transformée en consigne de couple à l'embrayage dont la manipulation est facilitée.

Néanmoins, l'utilisation directe des équations dynamiques pour déterminer le couple d'embrayage introduit une sensibilité au bruit de mesure préjudiciable à la dynamique de la régulation en couple et est relativement difficile à étendre au double embrayage.

De plus, dans le cas d'un double embrayage, l'estimation du couple d'embrayage n'est possible que dans certaines phases d'opérations de la transmission. Il est en effet très difficile d'estimer le couple transitant par chacun des deux embrayages, notamment lors du croisement des embrayage, c'est-à-dire lorsqu'un des embrayages passe d'un état embrayé à un état débrayé tandis que l'autre embrayage effectue le déplacement inverse. Durant un bref laps de temps, les deux embrayages sont alors simultanément en prise avec l'arbre moteur.

Pour résoudre notamment ces problèmes, l'invention propose un dispositif du type décrit précédemment, caractérisé en ce que le modèle dynamique comporte une décomposition de l'arbre de sortie en au moins deux arbres fictifs de sortie dont chacun est associé à un arbre d'entrée afin de simuler la répartition du couple résistant de l'arbre de sortie sur chacun des arbres d'entrée en prenant en compte le rapport de transmission engagé dans la boîte de vitesses.

Selon d'autres caractéristiques de l'invention

- la somme des vitesses de rotation de chaque arbre fictif de sortie est égale à la vitesse de rotation de l'arbre réel de sortie ;
- le moment d'inertie de chaque arbre fictif de sortie est égal au moment d'inertie de l'arbre réel de sortie ;
- le module de pilotage en couple comporte un module de sélection qui active une sélection de variables d'état déterminées suivant des conditions prédéterminées de fonctionnement de la chaîne de transmission et les conditions d'observabilité du modèle dynamique, seule la sélection de variables d'état activées étant estimée;
- les variables d'état inactives sont bloquées à leur dernière valeur calculée ;
- les variables d'état inactives sont réinitialisées à une valeur de référence instantanément ou progressivement ;
- plusieurs matrices d'évolution et de correction sont calculés préalablement sont mémorisées dans le module de sélection, chaque matrice d'évolution et chaque matrice de correction étant sélectionnée en fonction de valeurs mesurées et/ou estimées pour chaque combinaison de variables d'état ;
- le modèle dynamique mis en oeuvre par l'observateur comporte une modélisation de chaque moyen d'accouplement dans lequel le couple transmis par ledit moyen d'accouplement est calculé en multipliant le couple transmissible par le moyen d'accouplement déterminé en fonction d'une grandeur de commande du moyen d'accouplement ; par un facteur d'adaptation qui constitue une variable d'état non mesurée estimée précédemment par l'observateur ; et par un facteur de glissement qui est obtenu en fonction de variables d'état estimées par l'observateur comprenant l'angle de glissement et la différence de vitesse de rotation entre l'arbre moteur et l'arbre associé d'entrée de boîte de vitesses, le facteur de glissement étant borné entre -1 et +1 ;
- en cas de glissement du moyen d'accouplement, le facteur de glissement "$g_a$, $g_b$" est égal à +1 ou -1 en fonction du sens de glissement ;
- le facteur d'adaptation "$\alpha_A$, $\alpha_B$" est considéré comme variant très lentement dans le temps par rapport au pas de temps de calcul d'une estimation, de telle sorte que sa dérivée par rapport au temps est considérée comme nulle ;
- la commande des moyens d'accouplement est réalisée dans un laps de temps très court par rapport à la variation de la charge du véhicule, de manière que la dérivée par rapport au temps de la charge soit considérée comme nulle.

D'autres caractéristiques et avantages apparaîtront au cours de la lecture de la description qui va suivre pour la compréhension de laquelle on se reportera aux dessins annexés parmi lesquels :

- la figure 1 est une vue schématique qui représente une chaîne de transmission d'un véhicule automobile équipée d'un dispositif de commande des moyens d'accouplement ;
- la figure 2 est un schéma-bloc qui représente un module de commande en couple des moyens d'accouplement réalisé selon les enseignements de l'invention, et appartenant au dispositif de commande de la figure 1 ;
- la figure 3 est un schéma-bloc qui représente un module de régulation appartenant au module de commande en couple de la figure 2 ;
- la figure 4 est une vue schématique qui représente un modèle dynamique d'état mis en oeuvre par un observateur du module de commande de la figure 2 ;
- la figure 5 est un schéma-bloc qui représente l'observateur d'état du module de commande de la figure 2.

Pour la suite de la description, des éléments ayant des fonctions identiques, similaires ou analogues seront désignés par des mêmes numéros de référence.

Dans la suite de la description, le moment d'inertie d'un arbre sera considéré par rapport à son axe de rotation.

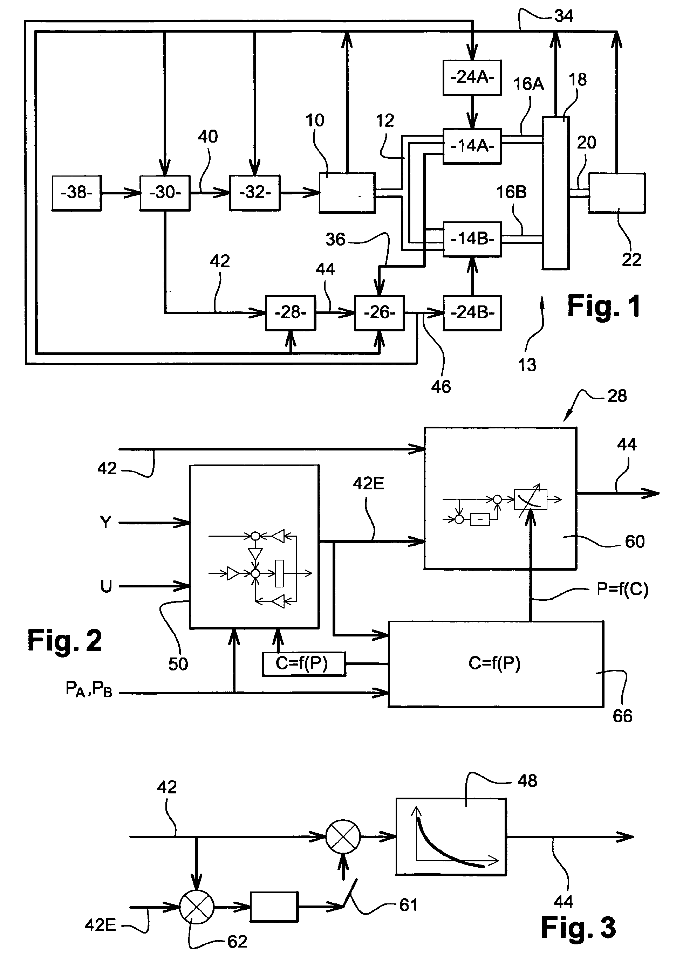

On a représenté schématiquement à la figure 1 un véhicule automobile équipé d'un moteur 10 à combustion interne et/ou électrique dont l'arbre moteur 12 est relié à des roues motrices (non représentées) par une chaîne de transmission 13.

La chaîne de transmission 13 comporte deux moyens d'accouplement à friction 14A, 14B de l'arbre moteur 12 à deux arbres associés d'entrée 16A, 16B d'une boîte de vitesses par exemple robotisée 18.

Selon une variante non représentée de l'invention, la chaîne de transmission comporte un unique moyen d'accouplement à friction de l'arbre moteur à un unique arbre associé d'entrée de la boîte de vitesses.

Les moyens d'accouplements à friction 14A, 14B seront appelés par la suite "embrayages".

La boîte de vitesses 18 est du type mécanique à plusieurs rapports de transmission. Les rapports de transmission appliqués à chaque arbre d'entrée 16A, 16B seront respectivement notés "$Q_A$" et "$Q_B$". La boîte de vitesses 18 comporte un unique arbre de sortie 20 qui est relié à des roues motrices du véhicule 22.

Chaque embrayage 14A, 14B est commandé par un actionneur 24A, 24B associé, qui agit par exemple sur la position "$P_A$, $P_B$" d'une butée d'embrayage (non représentée).

D'une façon bien connue de l'homme du métier et non représentée, cette butée d'embrayage agit elle-même sur des doigts radiaux d'un diaphragme annulaire qui est porté par un couvercle d'embrayage et qui agit axialement sur un plateau de pression de l'embrayage 14A, 14B pour le serrage des garnitures de friction d'un disque relié en rotation à l'arbre associé d'entrée 16A, 16B de la boîte de vitesses 18.

Il peut s'agir aussi d'un embrayage 14A, 14B ouvert au repos, l'actionneur 24A, 24B réalisant le serrage des garnitures par un moyen mécanique ou hydraulique.

Les garnitures peuvent travailler à sec ou dans l'huile. L'actionneur 24A, 24B est d'un type quelconque, par exemple à moteur électrique, à vérin hydraulique, ou autre.

Le véhicule comporte aussi un dispositif de commande en couple de chaque embrayage 14A, 14B.

Le dispositif de commande comprend notamment un module 26 de pilotage de l'actionneur 24A, 24B, ce module 26 recevant un signal de consigne produit par un module 28 de pilotage des moyens d'accouplement 14A, 14B en couple. Ce module de pilotage en couple 28 reçoit lui-même un signal de consigne 42 de couple transmissible par les moyens d'accouplement 14A, 14B fourni par un module 30 de supervision de la transmission qui fournit également des signaux de pilotage et de consigne à un système 32 de pilotage du moteur 10 du véhicule.

Le module de pilotage 26 de l'actionneur 24A, 24B, le module de pilotage en couple 28 et le module de supervision 30 sont formés par un ou plusieurs calculateurs électroniques numériques.

Des informations 34 en provenance du véhicule, du moteur 10 et/ou du système de pilotage 32, et de la boîte de vitesses 18, par exemple telles que la vitesse "$\omega_m$" de rotation du moteur 10, le couple "Tm" fourni par le moteur 10, la quantité de carburant, la quantité d'air, le rapport de transmission "$Q_A$, $Q_B$" utilisé, la température ambiante, la température du liquide de refroidissement, la vitesse "$\omega_v$" du véhicule, la vitesse "$\omega_A$, $\omega_B$" de rotation de chaque arbre d'entrée 16A, 16B, la vitesse des roues du véhicule, la tension électrique fournie par la batterie du véhicule sont appliquées au module 26 de pilotage de l'actionneur 24A, 24B, au module 28 de pilotage en couple, au module 30 de supervision de la transmission et au système 32 de pilotage du moteur 10 du véhicule.

Des informations 36 relatives à l'actionneur 24A, 24B et à l'embrayage 14A, 14B, telles que des valeurs d'effort, de pression, de position d'un organe mobile de l'actionneur 24A, 24B, de position "$P_A$, $P_B$" de la butée d'embrayage, de tension électrique, d'intensité de courant électrique, de température sont appliquées à des entrées du module 26 de pilotage de l'actionneur 24A, 24B.

Des informations 38 appliquées à des entrées du module de supervision de la transmission 30 comprennent des signaux de gestion et d'adaptation de stratégies de pilotage de la transmission, relatives au fonctionnement du véhicule, aux intentions du conducteur, au mode automatique de commande de la transmission, à l'adaptabilité du comportement de la transmission, à des niveaux de confort et de performance, etc.

Le module 30 de supervision de la transmission produit, à partir de ces informations et de stratégies de gestion enregistrées en mémoire, des signaux 40 de pilotage et/ou de consigne qui sont appliqués au système 32 de pilotage du moteur 10, et des signaux 42 de consigne appliqués au module 28 de pilotage en couple de l'embrayage 14A, 14B, les signaux 42 comprenant un signal de consigne de couple transmissible par l'embrayage 14A, 14B.

Le module 28 de pilotage en couple de l'embrayage 14A, 14B recevant ces signaux 42 et les informations 34 fournies par le moteur 10, la boîte de vitesses 18 et le reste du véhicule 22, produit un signal 44 de commande du module 26 de pilotage de l'actionneur 24A, 24B, le signal 44 étant un signal de consigne du paramètre de commande de l'embrayage 14A, 14B tel par exemple que la position "$P_A$, $P_B$" de la butée d'embrayage.

Le module 26 de pilotage de l'actionneur 24A, 24B reçoit ce signal de consigne 44, les informations 34 fournies par le moteur 10, la boîte de vitesses 18 et le reste du véhicule 22 et des informations 36 relatives à l'embrayage 14A, 14B et à son actionneur 24A, 24B et produit un signal 46 de commande de l'actionneur 24A, 24B.

On a illustré plus en détail à la figure 2 le module de pilotage en couple 28, qui reçoit un signal 42 de consigne de couple transmissible par les moyens d'accouplement 14A, 14B et qui produit un signal 44 de consigne d'un paramètre de commande appliqué au module 26 de pilotage de l'actionneur 24A, 24B.

Comme représenté à la figure 3, le signal 44 de consigne du paramètre de commande est produit à partir d'une courbe non linéaire apprise 48 qui est une courbe de variation du signal de consigne du paramètre de commande des moyens d'accouplement 14A, 14B en fonction du signal 44, c'est-à-dire du couple transmissible désiré. Cette courbe 48 est l'inverse d'une courbe (non représentée) de variation du couple qui est transmis par les moyens d'accouplement 14A, 14B en fonction de son paramètre de commande, qui est par exemple la position "$P_A$, $P_B$" de la butée d'embrayage.

On voit que la courbe 48 n'est pas une variation linéaire du paramètre de commande et que sa pente varie entre ses extrémités d'une valeur faible à une valeur élevée. En outre, la courbe 48 varie d'un véhicule à l'autre en raison des dispersions de fabrication des composants de l'embrayage 14A, 14B, elle varie aussi en fonction du temps, en raison notamment des variations de température de ses composants, de leur degré d'usure, des caractéristiques des composants du mécanisme d'embrayage 14A, 14B.

La courbe caractéristique 48 utilisée par le module 28 de pilotage en couple est une courbe apprise, déterminée par calcul à partir de valeurs mesurées ou estimées du couple transmis et du paramètre de commande et d'un modèle mathématique simple de la courbe caractéristique, ce qui permet de suivre l'évolution de cette courbe caractéristique et de prendre en compte les variations des paramètres qui la déterminent.

Selon les enseignements de l'invention, le module 28 de pilotage en couple comporte des moyens (non représentés) de mesure de variables d'état mesurées "Y" de la chaîne de transmission 13, les variables d'état mesurées "Y" n'étant représentative que partiellement de l'état dynamique actuel de la chaîne de transmission 13.

Par exemple, les variables d'état mesurées "Y" sont la vitesse de rotation "$\omega_m$" de l'arbre moteur 12, la vitesse de rotation "$\omega_A$, $\omega_B$" de chaque arbre d'entrée 16A, 16B, et la vitesse de rotation "$\omega_V$" de l'arbre de sortie 20.

Le module de pilotage en couple 28 comporte en outre des moyens de mesure de variables d'excitation "U" de la chaîne de transmission 13 telles que le couple moteur "Tm", la position "$P_A$, $P_B$" des butées d'actionneur 24A, 24B, les rapports de transmission "$Q_A$, $Q_B$" engagés dans la boîte de vitesses 18.

Selon une variante non représentée de l'invention, lorsque le moteur 10 est formé par un moteur électrique de traction, il est commandé en couple par un dispositif électronique de commande (non représenté). Le couple moteur "Tm" du vecteur d'excitation "U" peut ainsi être communiqué directement au module de pilotage 28 par le dispositif électronique de commande du moteur.

Selon une autre variante non représentée de l'invention, lorsque le moteur 10 est formé par un moteur électrique de traction agissant en coordination avec un moteur thermique, le vecteur d'excitation "U" contient à la fois l'information de couple Tme délivré par le moteur électrique et l'information de couple Tmt délivré par le moteur thermique.

Le module de pilotage en couple 28 comporte en outre un observateur d'états 50. Il s'agit ici d'un observateur d'états 50 dit "de Luenberger".

L'observateur d'états 50 met en oeuvre un modèle mathématique dynamique 52 simulant le comportement dynamique de tous les organes tournants de la chaîne de transmission 13 du véhicule automobile.

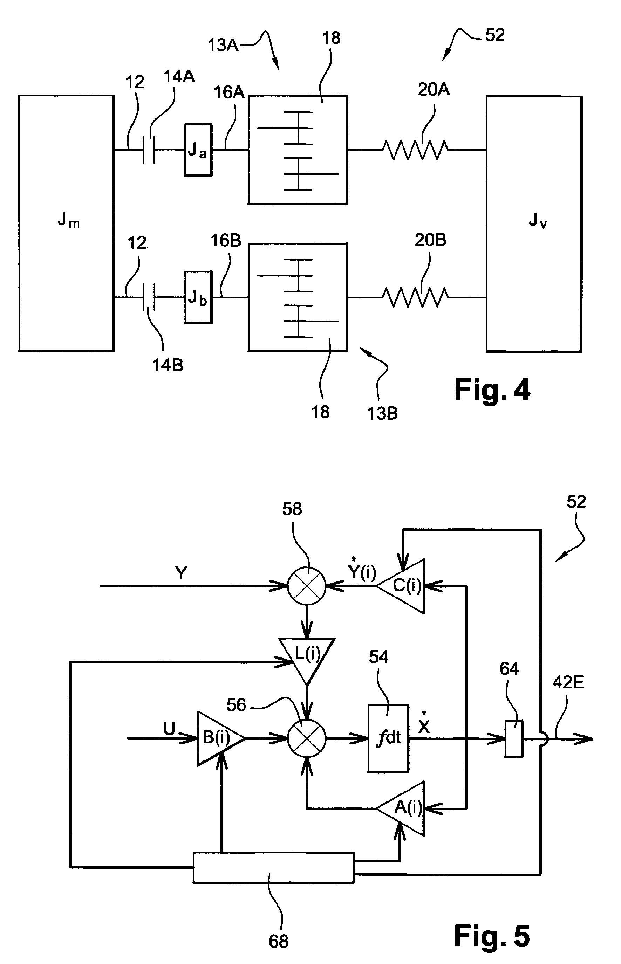

L'observateur d'états 50 est représenté plus en détail à la figure 5. Il est susceptible de calculer, à partir de ce modèle mathématique 52, une estimation de variables d'état "X*" représentatives de l'état dynamique actuel complet de la chaîne de transmission 13 à partir des variables d'état mesurées "Y", des variables d'excitation mesurées "U" et de l'estimation précédente des variables d'état "X*", en correspondance avec une matrice d'évolution "A".

Par état dynamique complet, on comprend que l'observateur d'états 50 permet d'estimer à tout moment l'état dynamique de chacun des arbres de la chaîne de transmission 13, et notamment leur vitesse de rotation "$\omega$" ainsi que les couples "T" qui transitent.

Le modèle mathématique dynamique 52 utilisé est représenté à la figure 4.

De manière à prendre en compte la présence des deux moyens d'accouplement 14A, 14B qui sont susceptibles d'être commandés indépendamment l'un de l'autre, la chaîne de transmission 13 est ici modélisée par deux chaînes parallèles fictives de transmission 13A, 13B.

Chaque chaîne fictive de transmission 13A, 13B comporte un embrayage 14A, 14B avec l'arbre moteur 12 commun, un arbre d'entrée 16A, 16B, une boîte de vitesses 18, et un arbre fictif de sortie 20A, 20B.

D'un point de vue cinématique, la somme des vitesses de rotations des arbres fictif de sortie 20A, 20B est égale à la vitesse de rotation de l'arbre réel de sortie 20, et le moment d'inertie de chaque arbre fictif de sortie 20A, 20B est égale au moment d'inertie de l'arbre réel de sortie 20. En revanche du point de vue du couple résistant transmis à chaque arbre d'entrée 16A, 16B par l'intermédiaire de la boîte de vitesses 18, chaque arbre fictif de sortie 20A, 20B est considéré indépendamment.

Ainsi, le modèle dynamique 52 comporte une décomposition de l'arbre de sortie 20 en au moins deux arbres fictifs de sortie 20A, 20B dont chacun est associé à un arbre d'entrée 16A, 16B afin de simuler la répartition du couple résistant de l'arbre de sortie 20 sur chacun des arbres d'entrée 16A, 16B en prenant en compte le rapport de transmission "$Q_A$, $Q_B$" engagé dans la boîte de vitesses 18.

Les équations différentielles du modèle mathématique dynamique 52 sont établies en appliquant le principe fondamental de la dynamique à chaque arbre.

Ainsi, le moment d'inertie "Jm" du moteur 10 multiplié par l'accélération de la rotation de l'arbre moteur 12 est égale au couple moteur "Tm" auquel on retranche un couple de frottement visqueux du moteur 10, d'une part, et la somme des couples transmis par chacun des moyens d'accouplement "Tca, Tcb", d'autre part. Cette égalité est représentée à l'équation "EQ1" suivante :

$$(EQ1):\ J_m\frac{d\omega_m}{dt}=T_m-f_m\cdot\omega_m-T_{ca}-T_{cb}$$

Chaque couple transmis "Tca, Tcb" est calculé à partir du couple transmissible "Cta, Ctb" qui est lui-même déduit de la position "$P_A$, $P_B$" de chaque actionneur 24A, 24B par lecture de la courbe apprise 48.

La connaissance de la valeur du couple transmissible "Cta(Pa), Ctb(Pb)" en fonction de la position "$P_A$, $P_B$" de chaque actionneur 24A, 24B est biaisée. En d'autres termes il y a un écart entre la valeur du couple transmissible "Cta (Pa), Ctb(Pb)" considéré dans le modèle et sa valeur réelle. Ce biais est par exemple dû à l'usure et aux conditions d'utilisation des moyens d'accouplement.

Un facteur d'adaptation "$\alpha_A$, $\alpha_B$" permet de modéliser ce biais. Le couple transmissible "Cta, Ctb" est ainsi corrigé par le facteur d'adaptation "$\alpha_A$, $\alpha_B$" qui peut être soit additif soit multiplicatif.

Comme c'est généralement le cas pour tout biais d'estimation, ce facteur d'adaptation "$\alpha_A$, $\alpha_B$" est considéré comme variant très lentement dans le temps par rapport au pas de temps de calcul d'une estimation, de telle sorte que sa dérivée par rapport au temps est considérée comme nulle, comme indiqué ci-dessous dans l'équation "E2" pour le premier embrayage 14A.

$$(EQ2):\ \frac{d\alpha_a}{dt}=0$$

Le couple effectivement transmis "Tca, Tcb" est alors calculé en pondérant le couple transmissible "Cta, Ctb" ainsi corrigé par un facteur de glissement "$g_a$, $g_b$". Le facteur de glissement "$g_a$, $g_b$" est obtenu en fonction de variables d'état estimées "X*" par l'observateur d'états 50 comprenant l'angle de glissement "$\alpha_{gA}$, $\alpha_{gB}$" et la vitesse de glissement "$\omega_{gA}$, $\omega_{gB}$". La vitesse de glissement "$\omega_{gA}$, $\omega_{gB}$" est égale à la différence de vitesses de rotation "$\omega_m$-$\omega_A$", "$\omega_m$-$\omega_B$" entre l'arbre moteur 12 et l'arbre associé d'entrée 16A, 16B. Le facteur de glissement "$g_a$, $g_b$" est borné entre -1 et +1. Le facteur de glissement "$g_a$, $g_b$" est ainsi calculé selon l'équation "EQ3" suivante, qui est ici appliquée au premier embrayage 14A.

$$(EQ3):\ g_a=\left[K\omega_a\cdot\omega_{ga}+KA_a\cdot\alpha_{ga}\right]_{-1}^{+1}$$

Dans cette équation "EQ3", les facteurs suivants ont été employés :

- "$KA_a$" représente la raideur de l'embrayage 14A, 14B lorsqu'il est dans un état embrayé de manière non glissante ;
- "$K\omega_a$" représente le coefficient d'amortissement de l'embrayage 14A, 14B lorsqu'il est embrayé de manière non glissante.

Ainsi, lorsque le couple "Tm" fourni par l'arbre moteur 12 est supérieur au couple transmissible "Cta, Ctb" corrigé, il y a glissement des moyens d'accouplement et le couple effectivement transmis "Tca, Tcb" est bien égal au couple transmissible "Cta, Ctb" corrigé. Le facteur de glissement "$g_a$, $g_b$" est alors égal à +1 ou -1 en fonction du sens de glissement.

La dérivée par rapport au temps de l'angle de glissement "$\alpha_{gA}$, $\alpha_{gB}$" est égale à la vitesse de glissement "$\omega_{gA}$, $\omega_{gB}$" de l'embrayage 14A, 14B considéré, comme indiqué dans l'équation "E4" pour le premier embrayage 14A.

$$(EQ4): \quad \frac{d\alpha_{ga}}{dt} = \omega_{ga}$$

Le couple effectivement transmis "Tca, Tcb" est ainsi calculé selon l'une des équations suivantes en fonction du choix d'un facteur d'adaptation "$\alpha_A$, $\alpha_B$" additif ou multiplicatif comme indiqué dans les équations "EQ5" suivantes pour le premier embrayage 14A.

$$(EQ5): \quad T_{ca} = \left[C_{ta}(P_a) + \alpha_a\right] \cdot g_a$$

$$ou$$

$$T_{ca} = \left[C_{ta}(P_a) \cdot \alpha_a\right] \cdot g_a$$

Le couple d'embrayage transmis "Tca, Tcb" est ainsi calculé en fonction de la vitesse de rotation "$\omega_A$, $\omega_B$" de chacun des arbres d'entrée 16A, 16B. Cette vitesse de rotation "$\omega_A$, $\omega_B$" est estimée au moyen du modèle dynamique 52 représenté à la figure 4.

Dans le cas où les moyens d'accouplement sont embrayés de manière non glissante, cela signifie que le couple effectivement transmis "Tca, Tcb" est égal au couple moteur "Tm". Cela signifie en outre que le couple moteur "Tm" et le couple transmis "Tca, Tcb" sont inférieurs ou égaux au couple transmissible "Cta, Ctb". Le facteur de glissement "$g_a$, $g_b$" simule alors le comportement la raideur et l'amortissement permettant de synchroniser la vitesse de rotation de l'arbre d'entrée "$\omega_A$, $\omega_B$" avec la vitesse de rotation de l'arbre moteur "$\omega_m$". Cela revient à asservir la vitesse de rotation de l'arbre moteur "$\omega_m$" avec l'une des vitesses de sortie "$\omega_A$, $\omega_B$" de l'embrayage. Le facteur de glissement "$g_a$, $g_b$" peut ainsi être vu comme un régulateur proportionnel et intégral saturé entre +1 et -1.

En outre lorsque l'un des embrayages 14A, 14B est en état débrayé, le facteur de glissement "$g_a$, $g_b$" est égal à zéro.

En appliquant le principe fondamental de la dynamique à chaque arbre d'entrée 16A, 16B on obtient ainsi que le produit de l'accélération de la rotation de l'arbre d'entrée 16A, 16B par le moment d'inertie dudit arbre est égal au couple transmis "Tca, Tcb" par l'embrayage 14A, 14B auquel on ôte un couple de frottement visqueux dudit arbre d'entrée 16A, 16B et auquel on ôte un couple résistant "Tpa, Tpb" exercé par l'arbre fictif associé de sortie 20A, 20B sur l'arbre d'entrée 16A, 16B via la boîte de vitesses 18. Ainsi, pour le premier arbre d'entrée 16A, on obtient l'équation "EQ6" suivante :

$$(EQ6): \quad J_a \frac{d\omega_a}{dt} = T_{ca} - f_a \cdot \omega_a - T_{pa}$$

Le couple résistant "Tpa, Tpb" de l'arbre fictif de sortie 20A, 20B est calculé en fonction du couple transmis "Tta, Ttb" par l'arbre fictif de sortie 20A, 20B pondéré par le rapport de transmission "$Q_A$, $Q_B$" engagé entre l'arbre d'entrée 16A, 16B et l'arbre fictif de sortie 20A, 20B. Ainsi, pour le premier arbre d'entrée 16A, on obtient l'équation "EQ7" suivante :

$$(EQ7): \quad T_{pa} = q_a \cdot T_{ta}$$

Pour calculer le couple "Tta, Ttb" de l'arbre fictif associé de sortie 20A, 20B, l'arbre fictif de sortie 20A, 20B est considéré comme un ressort de torsion de raideur "kta" et de coefficient d'amortissement "λta". On estime alors le couple "Tta, Ttb" transitant par l'arbre fictif de sortie 20A, 20B de manière dépendante d'un angle de torsion "$\alpha_{tA}$, $\alpha_{tB}$" dudit arbre. Il s'agit bien entendu d'un angle fictif qui sera estimé par l'observateur d'états 50, mais qu'il est impossible de mesurer réellement. Le couple "Tta, Ttb" de l'arbre fictif de sortie 20A, 20B est ainsi égal au produit de la raideur par l'angle de torsion "$\alpha_{tA}$, $\alpha_{tB}$" auquel on additionne le produit du coefficient d'amortissement par la dérivée par rapport au temps de l'angle de torsion "$\alpha_{tA}$, $\alpha_{tB}$". Ainsi, le couple du premier arbre fictif de sortie 20A et calculé selon l'équation "EQ8" suivante :

$$(EQ8) : \quad T_{ta} = kt_a \cdot \alpha_{ta} + \lambda_{ta} \frac{d\alpha_{ta}}{dt}$$

La dérivée par rapport au temps de l'angle de torsion "$\alpha_{tA}$, $\alpha_{tB}$" est elle-même égale à la différence entre la vitesse de rotation "$\omega_A$, $\omega_B$" de l'arbre d'entrée 16A, 16B pondéré par le rapport de transmission "$Q_A$, $Q_B$" engagé et la vitesse de rotation "$\omega_V$" de l'arbre de sortie 20, c'est-à-dire la vitesse du véhicule. Ainsi, pour le premier arbre fictif de sortie 20A, on obtient d'équation "EQ9" suivante :

$$(EQ9) : \quad \frac{d\alpha_{ta}}{dt} = q_a \cdot \omega_a - \omega_v$$

Enfin, le modèle des arbres fictifs de sortie 20A, 20B du véhicule automobile permet de déterminer la vitesse "$\omega_V$" du véhicule automobile pour en déduire les couples "Tta, Ttb" transitant dans les arbres fictifs de sortie 20A, 20B.
Ainsi, en appliquant le principe fondamental de la dynamique à l'essieu des roues motrice du véhicule, on obtient que le produit du moment d'inertie du véhicule par l'accélération de la rotation de l'essieu est égal à la somme des couples "Tta, Ttb" transitant par les arbres fictifs de sortie 20A, 20B à laquelle on ôte un couple de frottement visqueux et la charge du véhicule "Tl". Cette égalité est retranscrite dans l'équation "EQ10" suivante :

$$(EQ10) : \quad J_v \frac{d\omega_v}{dt} = T_{ta} + T_{tb} - f_v \cdot \omega_v - T_l$$

En considérant que la commande des moyens d'accouplement est réalisée dans un laps de temps très court par rapport à la variation de la charge du véhicule, les équations du modèle 52 sont simplifiées en posant que la dérivée par rapport au temps de la charge est nulle comme indiqué dans l'équation "EQ11" suivante.

$$(EQ11) : \quad \frac{dT_l}{dt} = 0$$

Selon une variante de réalisation de l'invention, la charge du véhicule est calculée en fonction de la pente "δ" de la route, de la résistance au roulement du véhicule et du rayon de ses roues motrices, en posant comme hypothèse simplificatrice que la variation de la pente "δ" dans le temps est négligeable, comme indiqué dans les équations "EQ12" suivantes.

$$\text{EQ12}: \qquad J_v \frac{d\omega_v}{dt} = T_{ta} + T_{tb} - f_v \cdot \omega_v - \frac{J_v}{R}\left(kr + \delta\right)$$

$$\frac{d\delta}{dt} = 0$$

Dans l'équation "EQ12", les termes suivant ont été employés :

- "R" représente le rayon de roulage d'une roue du véhicule ;
- "Jv" représente l'inertie du véhicule en prenant en compte la masse du véhicule ramenée à la roue, l'inertie des roues et les autres masses montées en aval des arbres de transmission 12, 16A, 16B, 20.

On obtient ainsi un système d'équations différentielles qui forme un modèle d'états 52 qui peut être entièrement défini à partir d'un nombre déterminé de variables d'état qui, par la suite, seront réunies dans un vecteur noté "X".

Le vecteur d'états "X" comporte ici la vitesse de rotation "$\omega_m$" de l'arbre moteur 12, la vitesse de rotation "$\omega_A$, $\omega_B$" de chaque arbre d'entrée 16A, 16B, la vitesse de rotation "$\omega_v$" de l'arbre de sortie 20, le facteur d'adaptation "$\alpha_A$, $\alpha_B$" de chaque embrayage 14A, 14B, l'angle de glissement "$\alpha_{gA}$, $\alpha_{gB}$" de chaque embrayage 14A, 14B, l'angle fictif de torsion "$\alpha_{tA}$, $\alpha_{tB}$" de chaque arbre fictif de sortie 20A, 20B ainsi que la charge du véhicule "Tl" ou la pente "$\delta$" de la route.

Sous forme vectorielle, l'équation d'états peut donc s'écrire comme l'égalité entre, d'une part, la dérivée par rapport au temps du vecteur d'états "X" et, d'autre part, le produit d'une matrice d'évolution "A" par le vecteur d'état "X" additionné du produit entre une matrice d'excitation "B" et le vecteur d'excitation "U". Le vecteur d'excitation ne comporte ici que le couple moteur "Tm". Cette égalité est retranscrite dans l'équation "EQ13" suivante :

$$\left(\text{EQ13}\right): \frac{dX}{dt} = A \cdot X + B \cdot U$$

Le vecteur d'état estimé est ainsi obtenu en intégrant, via un intégrateur 54, la somme, effectuée via un sommateur 56, du produit de la matrice d'évolution "A" par le vecteur d'état "X" et du produit entre la matrice d'excitation "B" et le vecteur d'excitation "U".

Les matrices d'évolution "A" et d'excitation "B" sont des matrices dont chaque terme est déduit du système d'équations différentielles précédemment énoncées. Ces termes peuvent être variables en fonction de grandeurs, estimées ou mesurées décrivant l'état de fonctionnement du véhicule tels que la position "$P_A$, $P_B$" des butée d'embrayage et les rapports de transmission "$Q_A$, $Q_B$" engagées

Pour pouvoir utiliser ce modèle 52 dans un calculateur numérique, il est connu de discrétiser l'équation d'état "EQ13" précédente qui est à temps continu, pour passer à une équation d'état "EQ13" à temps échantillonné. Il existe plusieurs méthodes de discrétisation connues qui ne seront pas décrites plus en détail, telles que la méthode d'Euler explicite ou la méthode de Tustin.

Le modèle mathématique 52 permet donc d'estimer par anticipation les couples "T" et les vitesses "$\omega$" de chaque arbre à chaque pas de temps.

L'observateur d'états 50 comporte en outre, comme illustré à la figure 5, des moyens de correction qui corrigent l'estimation "X*" suivante des variables d'état en soustrayant, au moyen d'un comparateur, le produit d'une matrice de correction "L" par la différence entre les variables d'état mesurées "Y" et les variables d'état estimées correspondantes "Y*". Ainsi l'équation EQ13 devient l'équation "EQ14" suivante :

$$\left(\text{EQ14}\right): \frac{dX*}{dt} = A \cdot X* + B \cdot U - L \cdot (Y - Y*)$$

La différence entre les variables d'état mesurées "Y" et les variables d'état estimées correspondantes "Y*" est effectuée via un comparateur 58.

Les variables d'états estimées "Y*" sont calculées en multipliant le vecteur d'état estimé "X*" par une matrice de mesure "C".

Le choix des termes de la matrice de correction "L" est effectué de manière que l'erreur d'estimation entre le vecteur d'états réels "X" et le vecteur d'états estimés "X*" converge vers zéro dans un laps de temps fini.

Le module de pilotage en couple 28 comporte aussi des moyens de régulation 60 de la consigne de couple 42 par comparaison, via un comparateur 62, avec un couple estimé 42E calculé, par un module de calcul 64, à partir des variables d'état estimées "X*" par l'observateur d'états 50.

Les moyens de régulation 60 peuvent également être shunté lorsque les conditions de fonctionnement exigent une réponse immédiate. A cet effet, les moyens de régulation 60 comportent un interrupteur 61 qui permet le fonctionnement en boucle ouverte, c'est-à-dire que la consigne de couple 42 est transmise directement au module de pilotage de l'actionneur 26 sans être régulée.

La consigne de couple 42 peut être une consigne de couple transmis ou de couple transmissible.

Le choix des termes de la matrice de correction "L" est avantageusement effectué de manière que la convergence du vecteur d'états estimé vers le vecteur d'état réel soit plus rapide, par exemple 3 à 5 fois plus rapide, que le pas de temps entre deux régulations de la consigne de couple 42. Les méthodes de détermination des termes de la matrice de correction "L" sont bien connus de l'homme du métier et ne seront donc pas décrit plus en détail par la suite.

Cependant, le temps de convergence est déterminé de manière à ne pas être trop rapide afin d'éviter une trop grande sensibilité aux bruits de mesure.

Ainsi, la consigne de couple 42 peut être régulée avec un couple estimé 42E très proche du couple réel, l'estimation du couple étant robuste.

Comme représenté à la figure 5, le vecteur d'état estimé "X*" est calculé en effectuant uniquement une opération d'intégration via l'intégrateur. Ainsi, les éventuels bruits de mesure n'ont que peu, voire pas d'influence sur le calcul du vecteur d'état estimé "X*".

En outre, l'estimation du facteur d'adaptation "$\alpha_A$, $\alpha_B$" permet de faire évoluer par apprentissage, comme représenté à la référence 66 de la figure 2, la courbe 48 caractéristique de chaque embrayage 14A, 14B.

Par ailleurs, il est possible de simplifier considérablement les calculs, et donc de raccourcir le temps de calcul du vecteur d'états estimés, en adaptant les calculs à effectuer en fonction des conditions de fonctionnement de la chaîne de transmission 13.

Ainsi, les moyens d'accouplement sont susceptibles d'être embrayés ou débrayés en fonction de la position "$P_A$, $P_B$" des butées d'embrayage, et lorsqu'ils sont embrayés, le couple moteur "Tm" peut être transmis à l'arbre d'entrée 16A, 16B associé avec ou sans glissement.

Lorsque l'embrayage 14A, 14B est déterminé comme étant débrayé en fonction de la position "$P_A$, $P_B$" de la butée d'embrayage, il n'est pas nécessaire de calculer les variables d'état relatives audit embrayage 14A, 14B, tels que le facteur d'adaptation "$\alpha_A$, $\alpha_B$" ou l'angle de glissement "$\alpha_{gA}$, $\alpha_{gB}$", pour pouvoir calculer les autres variables d'état.

Par la suite, les variables d'état calculées sont appelées variables d'état actives et les variables d'état qui ne sont pas calculées sont appelées variables d'état inactives.

Dans cette première situation, le facteur d'adaptation "$\alpha_A$, $\alpha_B$" ou l'angle de glissement "$\alpha_{gA}$, $\alpha_{gB}$" forment des variables d'état inactives.

De même, si l'embrayage 14A, 14B est dans un état embrayé de manière glissante, l'angle de glissement "$\alpha_{gA}$, $\alpha_{gB}$" n'a aucune influence sur l'estimation des autres états du modèle mathématique 52. Il n'est donc pas nécessaire de le calculer. Ainsi, dans ce cas, l'angle de glissement "$\alpha_{gA}$, $\alpha_{gB}$" forme une variable d'état inactive.

En outre, si l'embrayage 14A, 14B est dans un état embrayé de manière non glissante, le facteur d'adaptation "$\alpha_A$, $\alpha_B$" de l'embrayage et l'angle de glissement "$\alpha_{gA}$, $\alpha_{gB}$" jouent le même rôle et sont donc redondant. Il est ainsi possible de reporter toutes les variations sur l'angle de glissement "$\alpha_{gA}$, $\alpha_{gB}$" de manière à se dispenser du calcul du facteur d'adaptation "$\alpha_A$, $\alpha_B$". Ainsi, dans ce cas, le facteur d'adaptation "$\alpha_A$, $\alpha_B$" forme une variable inactive.

De plus, si aucun rapport de transmission "$Q_A$, $Q_B$" n'est engagé entre un arbre d'entrée 16A, 16B et l'arbre de sortie 20, aucun couple n'est transmis entre ces deux arbres. Il n'est alors pas utile de calculer l'angle de torsion "$\alpha_{tA}$, $\alpha_{tB}$" de l'arbre fictif de sortie 20A, 20B associé à cet arbre d'entrée 16A, 16B pour pouvoir estimer les autres variables d'état. Ainsi, dans ce cas, l'angle de torsion "$\alpha_{tA}$, $\alpha_{tB}$" de l'arbre fictif de sortie 20A, 20B forme une variable inactive.

Ainsi, le module de pilotage en couple 28 comporte un module de sélection 68 qui active une sélection de variables d'état déterminées suivant les conditions de fonctionnement de la chaîne de transmission 13 et les conditions d'observabilité du modèle dynamique 52, seule la sélection de variables d'état activées étant estimée.

Les variables d'état inactives sont bloquées à leur dernière valeur.

Selon une variante de réalisation de l'invention, les variables d'état inactives sont réinitialisées à une valeur de référence instantanément ou progressivement. La vitesse de réinitialisation de chaque variable d'état inactive peut être définie en fonction de la nature de la variable en question.

Plus particulièrement, plusieurs matrices d'évolution "A(i)" et de correction "L(i)" calculées par avance pour chacune des situations ou combinaisons de situations décrites précédemment sont mémorisées dans le module de sélection 68.

Chaque matrice d'évolution "A(i)" et chaque matrice de correction "L(i)" est sélectionnée en fonction des valeurs mesurées et/ou estimées pour chaque combinaison de variables d'état active de manière à prendre en compte les différentes combinaisons des situations décrites précédemment.

Le module de commande en couple réalisé selon les enseignements de l'invention permet d'obtenir une estimation fiable de l'état dynamique de la chaîne de transmission à tout moment grâce à l'observateur d'états.

Le vecteur d'état estimé "X*" calculé par l'observateur 50 permet de piloter les embrayages 14A, 14B avec une grande précision en prenant en compte le glissement des embrayages 14A, 14B.

En outre, le vecteur d'état estimé "X*" calculé par l'observateur 50 permet d'identifier de manière fiable et précise l'évolution, due par exemple à l'usure, des courbes caractéristiques 48 de chaque embrayage 14A, 14B.

Par ailleurs, le vecteur d'état estimé "X*" peut aussi avantageusement être utilisé pour informer d'autres organes de calcul du véhicule de l'état de la chaîne de transmission. Par exemple, la pente de la route "δ" et/ou la charge du véhicule "TI" peuvent être communiqués au module de supervision 30 pour réguler des stratégies de commande en couple des moyens d'accouplement 14A, 14B et/ou du moteur 10 et/ou des changement de rapport de transmission "Qa, Qb" de la boîte de vitesses 18.

En outre, lors de l'activation du module de pilotage en couple 28, les valeurs initiales des variables mesurées "Y" sont directement utilisées comme valeurs initiales des variables correspondantes du premier vecteur d'état estimé "X*" juste après l'activation. Ainsi, le temps de convergence de l'observateur est avantageusement raccourci lors de l'initialisation de l'activation du module de pilotage en couple 28, notamment lors du démarrage du véhicule.

Selon une variante non représentée de l'invention, la vitesse d'estimation du vecteur d'état estimé "X*" peut être encore augmentée en mémorisant les valeurs des variables actives du vecteur d'état estimé "X*" pour des conditions de fonctionnement déterminées de la chaîne de transmission 13. Les conditions de fonctionnement sont notamment déterminées en fonction des valeurs du vecteur d'excitation "U" et/ou des variables d'état mesurées "Y". Le vecteur d'état "X*" ainsi mémorisé peut ainsi être réutilisé comme dérivée du vecteur d'état initial à intégrer lorsque les conditions de fonctionnement déterminées se présentent à nouveau. Ainsi, le calcul de la dérivée du vecteur d'état "dX/dt" est remplacé par un rappel du vecteur d'état "X*" mémorisé qui est plus rapide que le calcul.

L'invention a été décrite pour une chaîne de transmission comportant à des moyens d'embrayage à friction formant un double embrayage à sec ou humide.

## Revendications

**1.** Module de pilotage en couple (28) d'au moins deux moyens d'accouplement à friction (14A, 14B) entre un arbre moteur (12) commun et un arbre associé (16A, 16B) d'entrée de boîte de vitesses (18) appartenant à une chaîne de transmission (13) d'un véhicule automobile, la chaîne de transmission (13) comportant au moins les organes suivants :

    - l'arbre moteur (12) qui fournit un couple moteur (Tm) ;
    - chaque moyen d'accouplement (14A, 14B) qui est actionné par un actionneur (24A, 24B) ;
    - chaque arbre associé (16A, 16B) d'entrée de boîte de vitesses (18) qui est susceptible d'être accouplé à l'arbre moteur (12) par le moyen d'accouplement (14A, 14B) associé ;
    - un arbre de sortie (20) de boîte de vitesses (18) qui est entraîné en rotation par chaque arbre d'entrée (16A, 16B) ;
    - une boîte de vitesses (18) qui est susceptible d'être pilotée de manière à changer le rapport de transmission (Qa, Qb) entre chaque arbre d'entrée (16A, 16B) et l'arbre de sortie (20) ;

le module de pilotage du moyen d'accouplement en couple (28) déterminant une valeur de consigne (44) d'une grandeur physique de commande de l'actionneur (24A, 24B) de chaque moyen d'accouplement (14A, 14B) à partir d'une consigne de couple (42) et de grandeurs physiques mesurées sur la chaîne de transmission (13) ;

le module de pilotage (28) comportant :

    - des moyens de mesure de variables d'état mesurées (Y) de la chaîne de transmission (13), les variables d'état mesurées (Y) étant représentative de l'état dynamique actuel partiel de la chaîne de transmission (13) ;
    - des moyens de mesure de variables de commande (U, Qa, Qb, Pa, Pb) de la chaîne de transmission (13) ;
    - un observateur (50), notamment du type observateur de Luenberger, mettant en oeuvre un modèle mathématique dynamique (52) simulant le comportement dynamique desdits organes de la chaîne de transmission (13) du véhicule automobile, et qui est susceptible de calculer une estimation de variables d'état (X*) représentatives de l'état dynamique actuel complet de la chaîne de transmission (13) à partir des variables d'état mesurées (Y), des variables de commande mesurées (U) et de l'estimation précédente des variables d'état (X*), en correspondance avec une matrice d'évolution (A) ;

- des moyens de correction (L) appartenant à l'observateur (50) qui corrigent l'estimation précédente (X*) des variables d'état en soustrayant le produit d'une matrice de correction (L) par la différence entre les variables d'état mesurées (Y) et les variables d'état estimées (Y*) correspondantes ;

- des moyens de régulation (60) de la consigne de couple (42) par comparaison avec un couple estimé (42E) calculé à partir des variables d'état estimées (X*) par l'observateur (50),

**caractérisé en ce que** le modèle dynamique (52) comporte une décomposition de l'arbre de sortie (20) en au moins deux arbres fictifs de sortie (20A, 20B) dont chacun est associé à un arbre d'entrée (16A, 16B) afin de simuler la répartition du couple résistant (Tpa, Tpb) de l'arbre de sortie (20) sur chacun des arbres d'entrée (16A, 16B) en prenant en compte le rapport de transmission (Qa, Qb) engagé dans la boîte de vitesses (18).

**2.** Module (28) selon la revendication précédente, **caractérisé en ce que** la somme des vitesses de rotation de chaque arbre fictif de sortie (20A, 20B) est égale à la vitesse de rotation de l'arbre réel de sortie (20).

**3.** Module (28) selon la revendication précédente, **caractérisé en ce que** le moment d'inertie de chaque arbre fictif de sortie (20A, 20B) est égal au moment d'inertie de l'arbre réel de sortie (20).

**4.** Module (28) selon l'une quelconque des revendications précédentes, **caractérisé en ce qu'**il comporte un module de sélection (68) qui active une sélection de variables d'état déterminées suivant des conditions prédéterminées de fonctionnement de la chaîne de transmission (13) et les conditions d'observabilité du modèle dynamique (52), seule la sélection de variables d'état activées étant estimée.

**5.** Module (28) selon la revendication précédente, **caractérisé en ce que** les variables d'état inactives sont bloquées à leur dernière valeur calculée.

**6.** Module (28) selon la revendication 4, **caractérisé en ce que** les variables d'état inactives sont réinitialisées à une valeur de référence instantanément ou progressivement.

**7.** Module (28) selon l'une quelconque des revendications 4 à 6, **caractérisé en ce que** plusieurs matrices d'évolution et de correction sont calculés préalablement sont mémorisées dans le module de sélection (68), chaque matrice d'évolution (A) et chaque matrice de correction (L) étant sélectionnée en fonction de valeurs mesurées (Y, U) et/ou estimées (X) pour chaque combinaison de variables d'état.

**8.** Module (28) selon l'une quelconque des revendications précédentes, **caractérisé en ce que** le modèle dynamique (52) mis en oeuvre par l'observateur (50) comporte une modélisation de chaque moyen d'accouplement (14A, 14B) dans lequel le couple transmis (Tca, Tcb) par ledit moyen d'accouplement (14A, 14B) est calculé en multipliant :

   - le couple transmissible (Cta, Ctb) par le moyen d'accouplement (14A, 14B) déterminé en fonction d'une grandeur de commande (Pa, Pb) du moyen d'accouplement (14A, 14B) ; par
   - un facteur d'adaptation ($\alpha_A$, $\alpha_B$) qui constitue une variable d'état non mesurée (X*) estimée précédemment par l'observateur (50) ; et par
   - un facteur de glissement ($g_a$, $g_b$) qui est obtenu en fonction de variables d'état estimées par l'observateur (50) comprenant l'angle de glissement ($\alpha_{gA}$, $\alpha_{gB}$) et la différence ($\omega_m$-$\omega_A$, $\omega_m$-$\omega_B$) de vitesse de rotation entre l'arbre moteur et l'arbre associé d'entrée de boîte de vitesses, le facteur de glissement étant borné entre -1 et +1.

**9.** Module selon la revendications précédente, **caractérisé en ce qu'**en cas de glissement du moyen d'accouplement (14A, 14B), le facteur de glissement "$g_a$, $g_b$" est égal à +1 ou -1 en fonction du sens de glissement.

**10.** Module (28) selon l'une quelconque des revendications 8 ou 9, **caractérisé en ce que** le facteur d'adaptation "$\alpha_A$, $\alpha_B$" est considéré comme variant très lentement dans le temps par rapport au pas de temps de calcul d'une estimation, de telle sorte que sa dérivée par rapport au temps est considérée comme nulle.

**11.** Module (28) selon l'une quelconque des revendications précédentes, **caractérisé en ce que** la commande des moyens d'accouplement est réalisée dans un laps de temps très court par rapport à la variation de la charge du véhicule, de manière que la dérivée par rapport au temps de la charge soit considérée comme nulle.

**Claims**

1. Torque control module (28) for at least two means of friction coupling (14A, 14B) between a common drive shaft (12) and an associated input shaft (16A, 16B) of a gearbox (18) belonging to a motor vehicle drive train (13), the drive train (13) comprising at least the following components:

   - the drive shaft (12) which provides a driving torque (Tm);
   - each coupling means (14A, 14B) which is actuated by an actuator (24A, 24B);
   - each associated input shaft (16A, 16B) of the gearbox (18) which is capable of being coupled to the drive shaft (12) by the associated coupling means (14A, 14B);
   - an output shaft (20) of the gearbox (18) which is driven in rotation by each input shaft (16A, 16B);
   - a gearbox (18) which is capable of being controlled so as to change the transmission ratio (Qa, Qb) between each input shaft (16A, 16B) and the output shaft (20);

   the torque control module (28) for the coupling means determining a setpoint value (44) of a physical quantity for controlling the actuator (24A, 24B) of each coupling means (14A, 14B) based on a torque setpoint (42) and physical quantities measured on the drive train (13);
   the control module (28) comprising:

   - means for measuring the measured state variables (Y) of the drive train (13), the measured state variables (Y) being representative of the partial current dynamic state of the drive train (13);
   - means for measuring control variables (U, Qa, Qb, Pa, Pb) of the drive train (13);
   - an observer (50), in particular of the Luenberger observer type, which uses a dynamic mathematical model (52) simulating the dynamic behaviour of the said components of the motor vehicle drive train (13), and which is capable of calculating an estimate of state variables (X*) representative of the complete current dynamic state of the drive train (13) from the measured state variables (Y), measured control variables (U) and the previous estimate of state the variables (X*), in correspondence with an evolution matrix (A);
   - correction means (L) belonging to the observer (50) which correct the previous estimate (X*) of the state variables by subtracting the product of a correction matrix (L) by the difference between the measured state variables (Y) and the corresponding estimated state variables (Y*);
   - means for regulating (60) the torque setpoint (42) by comparison with an estimated torque (42E) calculated from the estimated state variables (X*) by the observer (50),

   **characterised in that** the dynamic model (52) includes a decomposition of the output shaft (20) into at least two hypothetical output shafts (20A, 20B) each of which is associated with an input shaft (16A, 16B) so as to simulate the distribution of the resisting torque (Tpa, Tpb) of the output shaft (20) on each of the input shafts (16A, 16B), taking into account the transmission ratio (Qa, Qb) engaged in the gearbox (18).

2. Module (28) according to the preceding claim, **characterised in that** the sum of the rotational speeds of each hypothetical output shaft (20A, 20B) is equal to the rotational speed of the actual output shaft (20).

3. Module (28) according to the preceding claim, **characterised in that** the moment of inertia of each hypothetical output shaft (20A, 20B) is equal to the moment of inertia of the actual output shaft (20).

4. Module (28) according to any one of the preceding claims, **characterised in that** it includes a selection module (68) which activates a selection of state variables defined according to predetermined operating conditions of the drive train (13 ) and the observability conditions of the dynamic model (52), only the selection of active state variables being estimated.

5. Module (28) according to the preceding claim, **characterised in that** the inactive state variables are blocked at their last calculated value.

6. Module (28) according to claim 4, **characterised in that** the inactive state variables are reinitialised to a reference value instantaneously or progressively.

7. Module (28) according to any one of claims 4 to 6, **characterised in that** a plurality of pre-calculated evolution and correction matrices are stored in the selection module (68), each evolution matrix (A) and each correction matrix (L) being selected in relation to measured values (Y, U) and/or estimated values (X) for each combination of state variables.

8. Module (28) according to any one of the preceding claims, **characterised in that** the dynamic model (52) used by the observer (50) includes a model of each coupling means (14A, 14B) in which the torque transmitted (Tca, Tcb) by the said coupling means (14A, 14B) is calculated by multiplying:

- the torque transmissible (Cta, Ctb) by the coupling means (14A, 14B) determined in relation to a control quantity (Pa, Pb) of the coupling means (14A, 14B); by
- an adaptation factor ($\alpha_A$, $\alpha_B$) which constitutes a non-measured state variable (X*) previously estimated by the observer (50); and by
- a slippage factor ($g_a$, $g_b$) which is obtained as a function of state variables estimated by the observer (50) including the slip angle ($\alpha_{ga}$, $\alpha_{gb}$) and the difference ($\omega_m$-$\omega_A$, $\omega_m$-$\omega_B$) in rotational speed between the drive shaft and the associated gearbox input shaft, the slip factor being bounded between -1 and +1.

9. Module according to the preceding claim, **characterised in that** in case of slippage of the coupling means (14A, 14B), the slip factor "$g_a$, $g_b$" is +1 or -1 depending on the slip direction.

10. Module (28) according to any one of claims 8 or 9, **characterised in that** the adaptation factor "$\alpha_A$, $\alpha_B$" is considered as varying very slowly over time compared with the calculation time step of an estimate, so that its derivative with respect to time is considered null.

11. Module (28) according to any one of the preceding claims, **characterised in that** control of the coupling means is achieved in a very short period of time relative to the load variation of the vehicle, so that the derivative of the load with respect to time is considered null.

**Patentansprüche**

1. Modul zur Drehmomentsteuerung (28) von mindestens zwei Reibungskupplungsmitteln (14a, 14b) zwischen einer gemeinsamen Antriebswelle (12) und einer assoziierten Eingangswelle (16A, 16B) eines zum Antriebsstrang (13) eines Kraftfahrzeugs gehörenden Getriebes (18), wobei der Antriebsstrang (13) zumindest folgende Organe umfasst:

- die Antriebswelle (12), die ein Antriebsmoment (Tm) liefert;
- jedes Kupplungsmittel (14a, 14b), das durch einen Aktuator (24A, 24B) betätigt wird;
- jede assoziierten Eingangswelle (16A, 16B) des Getriebes (18), die geeignet ist, mit der Antriebswelle (12) durch das zugehörige Kupplungsmittel (14a, 14b) gekoppelt zu werden;
- eine Ausgangswelle (20) des Getriebes (18), die durch jede Eingangswelle (16A, 16B) rotatorisch angetrieben wird;
- ein Getriebe (18), das geeignet ist, gesteuert zu werden, um das Übersetzungsverhältnis (Qa, Qb) zwischen jeder Eingangswelle (16A, 16B) und der Ausgangswelle (20) zu wechseln;

wobei das Modul zur Drehmomentsteuerung (28) des Kupplungsmittels ausgehend von einem Moment-Sollwert (42) und am Antriebsstrang (13) gemessenen physikalischen Größen einen Sollwert (44) einer physikalischen Größe zur Ansteuerung des Aktuators (24A, 24B) von jedem Kupplungsmittel (14a, 14b) bestimmt;

wobei das Steuerungsmodul (28) umfasst:

- Mittel zum Messen von gemessenen Zustandsparametern (Y) des Antriebsstrangs (13), wobei die gemessenen Zustandsparameter (Y) repräsentativ für den partiellen aktuellen dynamischen Zustand des Antriebsstrangs (13) sind;
- Mittel zum Messen von Ansteuerungsparametern (U, Qa, Qb, Pa, Pb) des Antriebsstrangs (13);
- einen Beobachter (50), insbesondere einen Luenberger-Beobachter, der ein dynamisches mathematisches Modell (52) einsetzt, welches das dynamische Verhalten der besagten Organe des Antriebsstrangs (13) des Kraftfahrzeugs simuliert, und der in der Lage ist, in Übereinstimmung mit einer Entwicklungsmatrix (A) eine Abschätzung (X*) von Zustandsparametern zu berechnen, welche repräsentativ für den gesamten aktuellen dynamischen Zustand des Antriebsstrangs (13) sind, wobei die Berechnung ausgeht von den gemessenen Zustandsparametern (Y), den gemessenen Ansteuerungsparametern (U) und der vorangehenden Abschätzung (X*) der Zustandsparameter;
- zum Beobachter (50) gehörende Korrekturmittel (L), welche die vorangehende Abschätzung (X*) der Zustandsparameter korrigieren, indem das Produkt einer Korrekturmatrix (L) von der Differenz zwischen den gemessenen Zustandsparametern (Y) und den entsprechenden abgeschätzten Zustandsparametern (Y*) subtrahiert wird;

- Mittel (60) zur Regelung des Moment-Sollwerts (42) durch Vergleich mit einem abgeschätzten Moment (42E), welches ausgehend von abgeschätzten Zustandsparametern (X*) vom Beobachter (50) errechnet wird,

**dadurch gekennzeichnet, dass** das dynamische mathematische Modell (52) eine Zerlegung der Ausgangswelle (20) in mindestens zwei fiktive Ausgangswellen (20A, 20B) umfasst, von denen jede mit einer Eingangswelle (16A, 16B) assoziiert ist, um die Aufteilung des Widerstandsmoments (Tpa, Tpb) der Ausgangswelle (20) auf jede der Eingangswellen (16A, 16B) unter Berücksichtigung des in dem Getriebe (18) eingelegten Übersetzungsverhältnisses (Qa, Qb) zu simulieren.

2. Modul (28) nach dem vorangehenden Anspruch, **dadurch gekennzeichnet, dass** die Summe der Rotationsgeschwindigkeiten von jeder fiktiven Ausgangswelle (20A, 20B) gleich der Rotationsgeschwindigkeit der realen Ausgangswelle (20) ist.

3. Modul (28) nach dem vorangehenden Anspruch, **dadurch gekennzeichnet, dass** das Trägheitsmoment von jeder fiktiven Ausgangswelle (20A, 20B) gleich dem Trägheitsmoment der realen Ausgangswelle (20) ist.

4. Modul (28) nach einem der vorangehenden Ansprüche, **dadurch gekennzeichnet, dass** es ein Auswahlmodul (68) umfasst, das gemäß vorbestimmten Funktionsbedingungen des Antriebsstrangs (13) und den Bedingungen der Beobachtbarkeit des dynamischen Modells (52) eine Auswahl von bestimmten Zustandsparametern aktiviert, wobei nur die Auswahl der aktivierten Zustandsparameter abgeschätzt wird.

5. Modul (28) nach dem vorangehenden Anspruch, **dadurch gekennzeichnet, dass** die inaktiven Zustandsparameter an ihrem zuletzt berechneten Wert blockiert werden.

6. Modul (28) nach Anspruch 4, **dadurch gekennzeichnet, dass** die inaktiven Zustandsparameter sofort oder schrittweise wieder auf einen Referenzwert initialisiert werden.

7. Modul (28) nach einem der Ansprüche 4 bis 6, **dadurch gekennzeichnet, dass** mehrere vorab berechnete Entwicklungsmatrizen und Korrekturmatrizen in dem Auswahlmodul (68) gespeichert sind, wobei jede Entwicklungsmatrix (A) und jede Korrekturmatrix (L) in Abhängigkeit von gemessenen Werten (Y, U) und/oder abgeschätzten Werten (X) für jede Kombination von Zustandsparametern ausgewählt wird.

8. Modul (28) nach einem der vorangehenden Ansprüche, **dadurch gekennzeichnet, dass** das vom Beobachter (50) eingesetzte dynamische Modell (52) eine Modellierung von jedem Kupplungsmittel (14a, 14b) umfasst, in welchem das von dem Kupplungsmittel (14a, 14b) übertragene Drehmoment (Tca, Tcb) berechnet wird durch Multiplikation:

- des von dem Kupplungsmittel (14a, 14b) übertragbaren Drehmoments (Cta, Ctb), das in Abhängigkeit von einer Ansteuerungsgröße (Pa, Pb) des Kupplungsmittels (14a, 14b) bestimmt wird, mit
- einem Anpassungsfaktor ($\alpha_A$, $\alpha_B$), der einen nicht gemessenen vorher vom Beobachter (50) abgeschätzten Zustandsparameter (X*) bildet, und mit
- einem Schlupffaktor ($g_a$, $g_b$), der in Abhängigkeit von vom Beobachter (50) abgeschätzten Zustandsparametern erhalten wird, welche den Schlupfwinkel ($\alpha_{gA}$, $\alpha_{gB}$) und die Differenz ($\omega_m$-$\omega_A$, $\omega_m$-$\omega_B$) der Rotationsgeschwindigkeit zwischen der Antriebswelle und der assoziierten Eingangswelle des Getriebes umfassen, wobei der Schlupffaktor auf Werte zwischen -1 und +1 eingegrenzt ist.

9. Modul (28) nach dem vorangehenden Anspruch, **dadurch gekennzeichnet, dass** im Fall von Schlupf des Kupplungsmittels (14a, 14b) der Schlupffaktor "$g_a$, $g_b$" in Abhängigkeit von der Schlupfrichtung gleich +1 oder -1 ist.

10. Modul (28) nach einem der Ansprüche 8 oder 9, **dadurch gekennzeichnet, dass** der Anpassungsfaktor "$\alpha_A$, $\alpha_B$" als über die Zeit sehr langsam variierend angesehen wird im Verhältnis zu dem Zeitschritt der Berechnung einer Abschätzung, so dass seine zeitliche Ableitung als null angesehen wird.

11. Modul (28) nach einem der vorangehenden Ansprüche, **dadurch gekennzeichnet, dass** die Ansteuerung der Kupplungsmittel in einer im Verhältnis zur Veränderung der Belastung des Fahrzeugs sehr kurzen Zeitspanne ausgeführt wird, so dass die zeitliche Ableitung der Belastung als null angesehen werden kann.

Fig. 1

Fig. 2

Fig. 3

Fig. 4

Fig. 5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 102006045858
- US 20050130800 A
- FR 2862732
- FR 2863327 A